# EUROPÄISCHE PATENTSCHRIFT

(11) **EP 1 549 989 B1**
(45) Veröffentlichungstag und Bekanntmachung des Hinweises auf die Patenterteilung: **26.04.2006**
(21) Anmeldenummer: 03769503.8
(22) Anmeldetag: 30.09.2003
(51) Int. Cl.: G02B 21/24

(54) **MIKROSKOP**
MICROSCOPE
MICROSCOPE

(30) Priorität: 02.10.2002 DE 10246277
(43) Veröffentlichungstag der Anmeldung: 06.07.2005
(73) Patentinhaber: Leica Microsystems CMS GmbH, 35578 Wetzlar (DE)
(72) Erfinder: GILBERT, Manfred, 35641 Schöffengrund (DE)
(74) Vertreter: Reichert, Werner Franz
(86) Internationale Anmeldenummer: PCT/EP2003/050673
(87) Internationale Veröffentlichungsnummer: WO 2004/034120

(56) Entgegenhaltungen:
- DE-A- 2 217 102
- US-A- 3 997 239
- US-A- 5 844 714

## Beschreibung

Die Erfindung betrifft ein Mikroskop dessen Stativ aus möglicht wenig Schalenteilen aufgebaut ist. Hinzu kommt, dass das Mikroskop am Stativ lediglich für den Fokus einen Einstellknopf aufweist. Des weiteren besitzt das Mikroskop gegenüber der Höhe des Stativs eine schmale Bauweise und die Zahl der Bedienelemente ist auf ein Minimum reduziert. Das Mikroskop besitzt wenig Ecken und Kanten, so dass die Gefahr einer Beschädigung erheblich reduziert ist. Ferner ist der Einblick ergonomisch angeordnet.

Das U.S. Patent 3,997,239 offenbart ein Mikroskop, das aus Schalenförmigen Teilen zusammengesetzt ist. Der Mikroskoptisch ist an einem Arm befestigt und kann über eine Excenterscheibe in Richtung der optischen Achse des Mikroskops verfahren werden. Eine künstliche Beleuchtung für die Objekte auf dem Mikroskoptisch ist nicht vorgesehen. Ferner ist eine Tubushülse ebenfalls durch die Formgebung der Schalen für das Mikroskopstativ ausgebildet. Der Tubus selbst mit der Optik kann in die Tubushülse eingesetzt werden. Die optische Achse des Tubus steht senkrecht auf der Oberfläche des Mikroskoptisches. Ferner Tragen die Schalen einen Revolver mit Objektiven deren optischen Achsen mit der optischen Achse des Tubus parallel sind. Durch die senkrechte Anordnung des Tubus wird Ergonomie hinsichtlich des Einblicks durch den Benutzer keine Beachtung geschenkt.

Das U.S. Patent 4,361,377 beschreibt ebenfalls ein tragbares und kompaktes Mikroskop, das am Gehäuse mit einer Vielzahl an Einstellelementen versehen ist. Durch einen Schlitz im Gehäuse wird die zu untersuchende Probe eingeführt. Die Beleuchtung erfolgt über mindestens eine herkömmliche Glühlampe, die mit einer Batterie zur Stromversorgung verbindbar ist, Das Gehäuse ist aus zwei Schalen aufgebaut, die über eine Schraube miteinander verbunden werden. Das hier offenbarte Mikroskop ist quaderförmig ausgebildet und die zu untersuchenden Probenträger werden in das Gehäuse eingeschoben. Das Mikroskop besitzt nicht die herkömmliche c-förmige Gestalt des Stativs und erlaubt ebenfalls nicht die Untersuchung von Proben auf unterschiedlichen Probenträgern, da der verstellbare Mikroskoptisch fehlt.

Das U.S. Patent 5,844,714 offenbart ein tragbares Mikroskop, das einer Vielzahl von einzelnen Bauelementen zusammengesetzt werden muss, um ein Objekt zu beobachten. Das Objekt ist an einem schwenkbaren Arm befestigt, so dass durch geeignete Schwenkung eine Fokussierung erzielbar ist. Das Mikroskop ist umständlich zu handhaben und ferner besteht die Gefahr der Verlustes von einzelnen Bestandteilen. Für schnelle und routinemäßige Untersuchungen ist dieses Mikroskop nicht geeignet.

Das U.S. Patent 5,127,614 offenbart ein Mikroskopstativ das modular aufgebaut ist. Die Säule und der Arm, der z.B. den Tubus trägt, sind gegossene Bauteile. Die Basis des Stativs ist derart ausgestaltet, dass es die Säule umgreift. Das hier vorgeschlagene Mikroskop ist jedoch nicht als tragbares Mikroskop ausgebildet.

Der Erfindung liegt die Aufgabe zugrunde ein Mikroskop zu schaffen, das aus wenigen Bauteilen besteht und in den Gesamtabmessungen eine flache Bauweise besitzt. Hinzu kommt, dass das Mikroskop eine derartige Formgebung besitzt, die das Reinigen des Mikroskopstativs erheblich erleichtert.

Die objektive Aufgabe wird durch ein Mikroskop gelöst, das die Merkmale des Patentanspruchs 1 aufweist.

Die Erfindung hat den Vorteil, dass das Stativ des Mikroskops aus einer ersten Gehäuseschale und einer zweiten Gehäuseschale aufgebaut ist. Ferner definieren die erste und die zweite Gehäuseschale ein Bodenteil, auf dem das Stativ steht. Das Stativ ist c-förmig gestaltet und das Bodenteil ist nach außen hin durch eine Stativbodenabdeckung abgeschlossen. Ferner ist an der ersten und der zweiten Gehäuseschale im Inneren jeweils ein Verbindungsmittel vorgesehen, die in geeigneter Weise zusammenwirken. Das Verbindungsmittel ist von außerhalb des Stativs bei angebrachter Stativbodenabdeckung unzugänglich. Bevor die Stativbodenabdeckung befestigt ist, werden die Verbindungsmittel fixiert. Die Fixierung kann z.B. Mittels einer Schraube geschehen. Eine der zusammengebauten ersten oder zweiten Gehäuseschale definiert eine Freisparung, in der Mikroskoptisch einsetzbar ist und durch einen Verstellkopf in der Höhe verstellt werden kann. Für den Verstellknopf ist in der ersten und der zweiten Gehäuseschale eine Bohrung ausgebildet, durch die eine Welle geführt ist, auf der ein Excenter sitzt. Über den Excenter kann der Mikroskoptisch in der Höche verstellt werden. Ferner ist von Vorteil, dass das Stativ des Mikroskops aus nur drei Gehäuseteilen aufgebaut ist. Hinzu kommt, dass die äußere Kontur des Mikroskops von keinen Verbindungsmitteln gestört ist. Dies erleichtert die Reinigung des Mikroskops erheblich. Zusätzlich besitzt das gesamte Mikroskop eine flache Bauform, wodurch das Mikroskop einfach in einen Transportkoffer, der die Abmessungen eines herkömmlichen Aktenkoffers aufweist, transportiert werden kann. Ferner können im Transportkoffer noch Halterungen für Objektträger, Wechselobjektive, Präparationsmittel oder Ersatzteile vorgesehen sein.

Weitere vorteilhafte Ausgestaltungen der Erfindung können den Unteransprüchen entnommen werden.

In der Zeichnung ist der Erfindungsgegenstand schematisch dargestellt und wird anhand der Figuren nachfolgend beschrieben. Dabei zeigen:
- Fig. 1: eine perspektivische Ansicht des Mikroskops;
- Fig. 2: eine Seitenansicht, die ein weiteres Ausführungsbeispiel des Mikroskops beschreibt,
- Fig. 3: eine Seitenansicht des Mikroskops bei dem ein Gehäuseteil entfernt ist, um einen Einblick in das Innere der Stativs zu erlauben;
- Fig. 4: eine Explosionsdarstellung des Stativs, bestehend aus der ersten und der zweiten Gehäuseschale und dem Boden,
- Fig. 5: eine Darstellung, bei der das Zusammenwirken des Montagemittels mit dem Verbindungsmittel für die erste und die zweite Gehäuseschale zu erkennen ist; und
- Fig. 6: eine Darstellung des Transportkoffers für das Mikroskop.

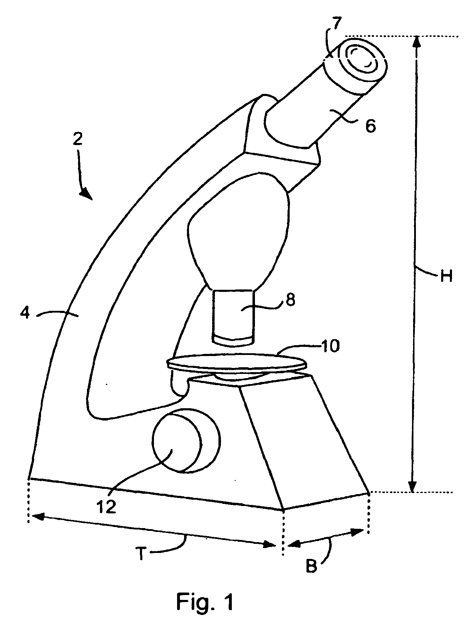

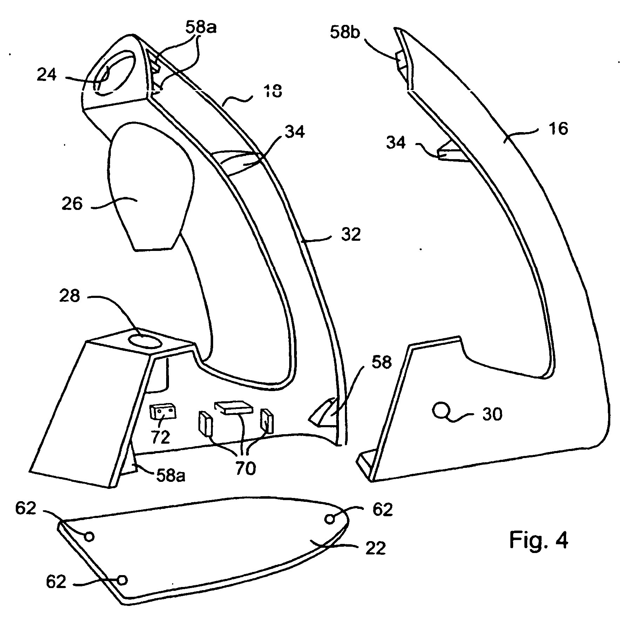

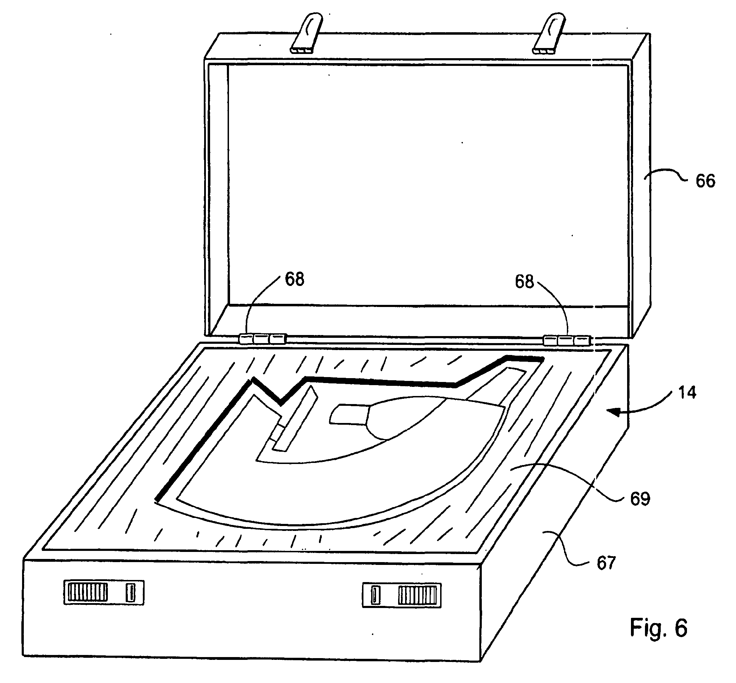

In Fig. 1 ist das Mikroskop 2 perspektivisch dargestellt. Das Mikroskop umfasst eine Stativ 4, an dem ein Okularrohr 6, mindestens ein Objektiv 8 und ein in der Höhe verstellbarer Mikroskoptisch 10 vorgesehen sind. Das mindestens eine Objektiv 8 definiert eine optische Achse 13 (siehe Fig. 3). In das Okularrohr 6 ist ein Okular 7 eingesetzt. Das Okular 7 definiert ebenfalls eine optische Achse 9 (siehe Fig. 3). Ferner ist beidseitig am dem Stativ 4 jeweils ein Verstellknopf 12 vorgesehen mit dem der Mikroskoptisch 10 in der Höhe relativ zum Objektiv 8 verstellt werden kann. Das Mikroskop 2 weist eine Höhe H, eine Breite B und eine Tiefe T auf, die derart gewählt sind, dass das Mikroskop 2 in einem herkömmlichen Aktenkoffer 14 (siehe Fig. 6) transportiert werden kann. Unter einem herkömmlichen Aktenkoffer 14 ist ein Aktenkoffer 14 zu verstehen, der eine Breite von ca. 48 cm, eine Höhe von ca. 36 cm und eine Tiefe von ca. 11 cm aufweist.

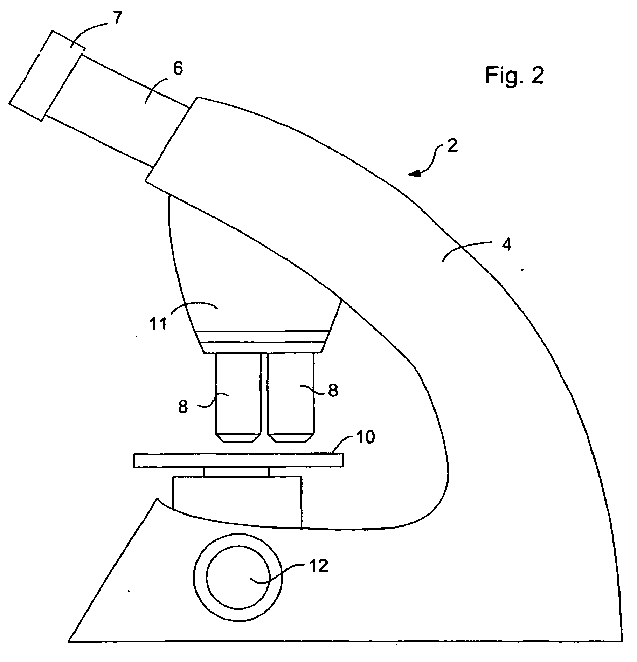

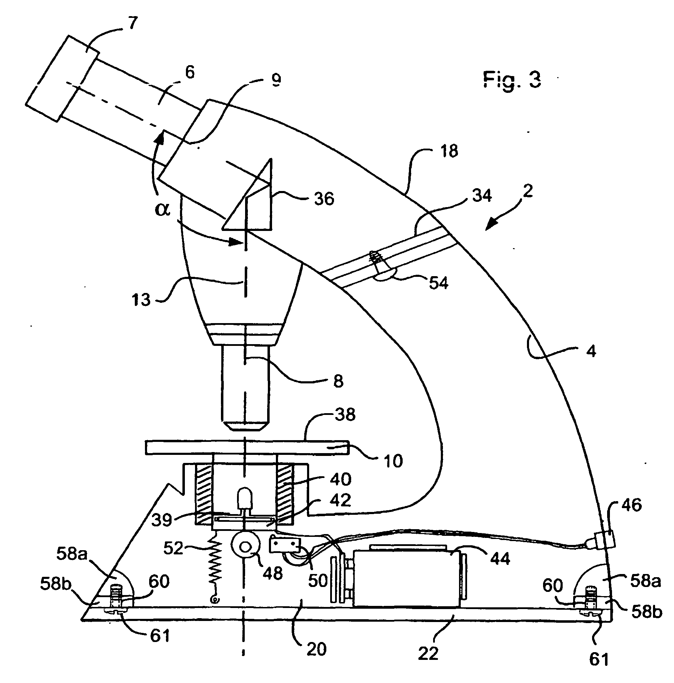

Fig. 2 zeigt eine Seitenansicht eines zweiten Ausführungsbeispiels des Mikroskops 2. Hier ist ein Objektivrevolver 11 vorgesehen, der mehrere wechselbare Objektive 8 trägt. Andere mechanischen Anordnungen des Objektivrevolvers 11 sind denkbar und liegen im handwerklichen Können eine Fachmanns. Letztendlich ist entscheidend, dass mit dem Objektivrevolver 11 jeweils eines der Objektive 8 in eine Arbeitsposition verbringbar ist. Dadurch kann eine auf dem Mikroskoptisch 10 befindliche Probe (nicht dargestellt) beobachtet und untersucht werden. Wie bereits erwähnt erfolgt die Verstellung des Mikroskoptisches 10 relativ zum Objektiv mittels des Verstetlknopfes 10.

Fig. 3 ist eine Seitenansicht des Mikroskops 2, bei dem ein Gehäuseteil entfernt ist, um einen Einblick in das Innere der Stativs 4 zu erhalten. Das Stativ 4 ist im wesentlichen aus einer ersten und einer zweiten Gehäuseschale 16 und 18 (siehe Fig. 4) aufgebaut. Das Stativ 4 ist c-förmig ausgebildet und steht auf einer Stativbodenabdeckung 22, die mit einem Bodenteil 20 des Stativs 4 verbunden ist. Das Bodenteil 20, das ebenfalls durch die erste und zweite Gehäuseschale 16 und 18 ausgebildet. Das Bodenteil 20 ist mit der Stativbodenabdeckung 22 verschlossen. Bevor die Stativbodenabdeckung 22 angebracht ist, werden die erste und die zweite Gehäuseschale 16 und 18 jeweils mit mindestens einem Verbindungsmittel 34 miteinander verbunden. Das Verbindungsmittel 34 ist im Innern der ersten und der zweiten Gehäuseschale 16 und 18 angeordnet und werden über eine Schraube 54 fest miteinander verbunden. Von außerhalb des Stativs 4 ist die Schraube 54 nicht zu sehen womit die äußere Form des Stativs 4 durch keinerlei Verschraubungen gestört ist. Im Innern der z.B. der zweiten Gehäuseschale 18 ist ebenfalls ein optisches Umlenkmittel 36 angeordnet. Das optische Umlenkmittel 36 ist erforderlich, da die optische Achse 9 des in das Okularrohr 6 eingesetzten Okulars 7 und die optische Achse 13 des Objektivs 8, welches sich in der Arbeitsposition befindet, unter einem Winkel α angeordnet sind. Der Winkel α ist als stumpfer Winkel ausgebildet, um für den Benutzer eine ergonomische Einblickposition zu erzielen. Das optische Umlenkmittel 36 ist dabei derart ausgebildet, dass der Benutzer eine Abbildung der Probe sieht, die die gleiche Orientierung hat wie die Probe selbst. Das Objektiv 8 kann als Einzelobjektiv ausgebildet sein. Ebenso kann das Objektiv 8 auf einem Revolver 11 angebracht sein, was dem Benutzer eine Möglichkeit eröffnet, schnell zwischen verschiedenen Vergrößerungen zu wechseln. Gegenüber dem Bodenteil 20 ist der Mikroskoptisch 10 vorgesehen. Der Mikroskoptisch 10 ist eine Einheit und ist aus einem Probenauflageteil 38 und einen zylinderförmigen Führungsteil 40 ausgebildet. Das zylinderförmige Führungsteil 40 ist an einer Seite durch einen Boden 42 und an der anderen Seite durch das Probenauflageteil 38 verschlossen. Der Boden 42 umfasst ein Beleuchtungsmodul 39 (Elektronik und Lichtquelle). Das Probenauflageteil 38, das zylinderförmige Führungsteil 40 und der Boden 42 sind zu einer Einheit zusammengeklebt. Dies gewährleistet eine einfache und preiswerte Endmontage des gesamten Mikroskops 2. Im Bodenteil 20 des Stativs 4 ist eine Batterie 44 untergebracht, die zur Stromversorgung des Beleuchtungsmoduls 39 dient. Als preiswerte Ausführung kann eine Regelung (nicht dargestellt) der Lichtintensität des Beleuchtungsmodul 39 vorgesehen sein. Die Regelung kann einfach über ein Potentiometer durchgeführt werden.

Das Beleuchtungsmodul 39 des Mikroskops 2 umfasst mindestens eine weiße LED. Ebenso kann die Batterie 44 in Form eines Akkumulators ausgebildet sein. In einer anderen Ausführungsform des Mikroskops 2 kann ebenfalls eine Anschlussbuchse 46 für eine externe Stromversorgung vorgesehen sein. Zur Höhenverstellung des Mikroskoptisches 20 ist ein Excenter 48 vorgesehen, der über den Verstellknopf 12 (Fig. 1) in der Höhe relativ zum Objektiv 8 verstellt werden kann. Mit dem Innem der Gehäuseschale 18 und dem Boden 42 des Mikroskoptisches ist ein elastisches Element 52 verbunden, das für den Mikroskoptisch 10 eine Rückstellkraft darstellt, die den Mikroskoptisch 10 beim Absenken durch den Excenter in die Freisparung 28 (siehe Fig. 4) zurückholt. Ferner ist ein Ein-/ Ausschalter 50 derart angebracht, dass dieser durch das Absenken bzw. durch das Anheben des Mikroskoptisches 10 betätigt wird. Durch den Ein-/ Ausschalter 50 wird die Stromversorgung zum Beleuchtungsmodul 39 unterbrochen bzw. hergestellt. Das elastische Element 52 kann in der Form einer Spiralfeder oder eines Gummibandes ausgestaltet sein.

Wie auch in Fig.4 dargestellt, besitzt das Stativ 4 eine Öffnung 24 für das Okularrohr 6 und eine Befestigung 26 für ein Objektiv 8. In einer der ersten oder der zweiten Gehäuseschale 16 oder 18 definieren eine Freisparung 28, in die der Mikroskoptisch 10 einsetzbar ist. Durch den Verstellkopf 12 ist der Mikroskoptisch 10 in der Höhe verstellbar, hierzu ist für den Verstellknopf 12 in der ersten und der zweiten Gehäuseschale 16 und 18 eine Bohrung 30 ausgebildet. An hand des zusammengebauten Stativs 4 kann man die erste und die zweite Gehäuseschale 16 und 18 dadurch unterscheiden, dass entlang der Verbindung zwischen der ersten und der zweiten Gehäuseschale 16 und 18 eine Nut 32 verläuft.

Die Explosionsdarstellung des Stativs 4 aus Fig. 4 zeigt, dass das Stativ 4 aus einer ersten und einer zweiten Gehäuseschale 16 und 18 und dem Boden 22 besteht. An den Gehäuseschalen 16 und 18 ist jeweils das Verbindungsmittel 34 angebracht. Die Verbindungsmittel 34 werden z.B. in Form einer Schraube 54 (siehe Fig. 3) zusammengehalten und verbunden. Ferner sind an den Rändern der ersten und der zweiten Gehäuseschale 16 und 18 Positionierelemente 58, 58a und 58b vorgesehen, die eine Ausrichtung der ersten und der zweiten Gehäuseschalen 16 und 18 ermöglichen, bevor diese Zusammengeschraubt werden. Die erste und die zweite Gehäuseschale 16 und 18 bildet jeweils am inneren Rand des Bodenteils 20 mehrere Gewindeöffnungen 60 (siehe Fig. 3) aus, die mit Bohrungen 62 in der Stativbodenabdeckung 22 fluchten. Durch die Bohrungen 62 in der Stativbodenabdeckung 22 werden Schrauben 61 in die Gewindeöffnungen 60 eingeschraubt, um den Boden 22 an der ersten und der zweiten Gehäuseschale 16 und 18 zu befestigen. Zusätzlich sind die Positionierelemente 58 und 58a der ersten und der zweiten Gehäuseschale 16 und 18 in Bereich des Bodenteils 20 des Stativs 4 derart ausgestaltet, dass durch die Schrauben 61 für die Befestigung des Bodens 22 auch eine Fixierung der ersten und der zweiten Gehäuseschale 16 und 18 erzielbar ist. Ferner ist im Inneren der zweiten Gehäuseschale 18 mindestens ein Haltemittel 70 für die Batterie oder den Akku ausgeformt. Ebenso ist hier auch ein Befestigungselement 72 für den Schalter ausgebildet.

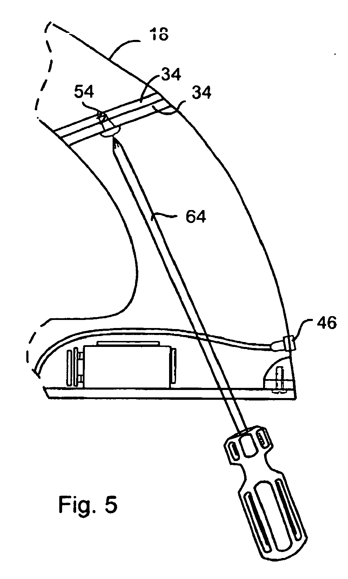

Fig. 5 zeigt eine Detaildarstellung, bei der das Zusammenwirken eines Montagemittels 64 mit dem Verbindungsmittel 34 für die erste und die zweite Gehäuseschale 16 und 18 zu erkennen ist. Das Montagemittel 64 ist derart ausgestaltet, dass es durch das Bodenteil 20 des Stativs 4 zum Verbindungsmittel 34 reicht, um dadurch die Schraube 54 einzudrehen, die die erste und die zweite Gehäuseschale 16 und 18 miteinander verbindet. Die Verbindung der ersten und der zweiten Gehäuseschale 16 und 18 erfolgt bevor die Stativbodenabdeckung 22 mit der ersten und der zweiten Gehäuseschale 16 und 18 verbunden ist.

Der Transportkoffer 14 für das Mikroskop 2 ist in Fig. 6 dargestellt. Der Transportkoffer 14 stellt eine Möglichkeit für den Transport des Mikroskops 2 dar. Für einen Benutzer ist diese Transportmöglichkeit vorteilhaft, da dies bei Feldversuchen einen sicheren Transport darstellt. Der Transportkoffer 14 umfasst einen ersten und einen zweiten Teil 66 und 67, die mit einem Scharnier 68 miteinander verbunden sind. In dem Transportkoffer 14 ist im ersten und zweiten Teil 66 und 67 jeweils eine Transportsicherung 69 vorgesehen, die als teilweiser Negativabdruck des Mikroskops 2 ausgebildet ist. Bei geschlossenen Transportkoffer 14 ist das gesamte Mikroskop 2 durch den Negativabdruck umschlossen. Die Transportsicherung 69 ist aus einem geeigneten Polymermaterial hergestellt. Der Transportkoffer 14 besitzt eine Höhe H_{K}, eine Breite B_{K} und eine Tiefe T_{K}, die alle Größer sind als die Außenabmessungen des Mikroskops 2.

Die Erfindung wurde in Bezug auf eine besondere Ausführungsform beschrieben. Es ist jedoch selbstverständlich, dass Änderungen und Abwandlungen durchgeführt werden können, ohne dabei den Schutzbereich der nachstehenden Ansprüche zu verlassen.

## Patentansprüche

1. Mikroskop (2) mit einem Stativ (4), das aus einer ersten Gehäuseschale und einer zweiten Gehäuseschale (16 und 18) aufgebaut ist, wobei das Stativ (4) einen höhenverstellbaren Mikroskoptisch (10) trägt, und die erste und die zweite Gehäuseschale (16 und 18) definieren ein Bodenteil (20), auf dem das Stativ (4) steht, **dadurch gekennzeichnet, dass** das Stativ (4) c-förmig ist, eine Stativbodenabdeckung (22), die das Bodenteil (20) des Stativs (4) nach außen hin abschließt und mindestens ein Verbindungsmittel (34) für die erste und die zweite Gehäuseschale (16 und 18) vorgesehen ist, wobei das Verbindungsmittel (34) von außerhalb des Stativs (4) bei angebrachter Stativbodenabdeckung (22) unzugänglich ist.

2. Mikroskop nach Anspruch 1, **dadurch gekennzeichnet, dass** eine der zusammengebauten ersten und der zweiten Gehäuseschale (16 oder 18) eine Freisparung (28) definieren, in die der Mikroskoptisch (10) einsetzbar und durch einen Verstellkopf (12) in der Höhe verstellbar ist, wobei für den Verstellknopf (12) in der ersten und der zweiten Gehäuseschale (16 und 18) eine Bohrung (30) ausgebildet ist.

3. Mikroskop nach Anspruch 1, **dadurch gekennzeichnet, dass** eine Schraube (54) zum Verbinden des Verbindungsmittels (34) für die erste und die zweite Gehäuseschale (16 und 18) vorgesehen ist, und dass das Zusammenschrauben mit einem Montagemittel (64) durch das Bodenteil (20) des Stativ (4) geschieht, so dass die äußere Kontur des Stativs (4) ungestört ist.

4. Mikroskop nach Anspruch 1, **dadurch gekennzeichnet, dass** das Stativ (4) eine Öffnung (24) für ein Okularrohr (6) und eine Befestigung (26) für mindestens ein Objektiv (8) aufweist.

5. Mikroskop nach Anspruch 4, **dadurch gekennzeichnet, dass** das Okular (7) im Okularrohr (6) eine optische Achse (9) definiert und das mindestens eine in der Arbeitsposition befindliche Objektiv (8) eine optische Achse (13) definiert, und dass die optische Achse (9) des Okulars (7) und die optische Achse (13) des Objektivs (8) unter einem stumpfen Winkel (α) angeordnet sind.

6. Mikroskop nach Anspruch 5, **dadurch gekennzeichnet, dass** der stumpfe Winkel (α) zwischen der optischen Achse (13) des mindestens einen Objektivs (8) und der optischen Achse (9) des Okulars (13) ausgebildet ist..

7. Mikroskop nach Anspruch 1, **dadurch gekennzeichnet, dass** im Innern der ersten oder der zweiten Gehäuseschale (16 oder 18) ein optisches Umlenkmittel (36) vorgesehen ist und derart ausgebildet ist, dass der Benutzer eine Abbildung der Probe sieht, die die gleiche Orientierung wie die Probe selbst hat.

8. Mikroskop nach Anspruch 7, **dadurch gekennzeichnet, dass** das optische Umlenkmittel (36) eine Spiegelanordnung oder ein Prisma ist.

9. Mikroskop nach Anspruch 1, **dadurch gekennzeichnet, dass** das Stativ (4) zusammen mit dem Mikroskoptisch (10), und dem Verstellknopf Abmessungen aufweist, die kleiner sind als die eines herkömmlichen Transportkoffers (14).

10. Mikroskop nach Anspruch 9, **dadurch gekennzeichnet, dass** der Transportkoffer (14) aus einem ersten und einem zweiten Teil (66 und 67) aufgebaut sind, und dass im ersten und im zweiten Teil (66 und 67) des Transportkoffers (14) jeweils eine Transportsicherung für das Mikroskop vorgesehen ist, wobei Transportsicherung die jeweils als Teil eines Negativabdrucks des Mikroskops ausgebildet ist.

11. Mikroskop nach Anspruch 1, **dadurch gekennzeichnet, dass** in der Befestigung für das Objektiv ein einzelnes Objektiv vorgesehen ist.

12. Mikroskop nach Anspruch 1, **dadurch gekennzeichnet, dass** ill det Befestigung für das Objektivs ein Objektivrevolver vorgesehen ist.

## Claims

1. Microscope (2) having a stand (4) which is constructed from a first housing shell and a second housing shell (16 and 18), the stand (4) supporting a high-adjustable microscope stage (10), and the first and the second housing shells (16 and 18) defining a base part (20) on which the stand (4) stands, **characterized in that** the stand (4) is c-shaped, a stand base cover (22) closes the base part (20) of the stand (4) off from the outside, and at least one connecting means (34) is provided for the first and the second housing shells (16 and 18), the connecting means (34) being inaccessible from outside the stand (4) when the stand base cover (22) is fitted.

2. Microscope according to Claim 1, **characterized in that** one of the assembled first and second housing shells (16 or 18) defines a cutout (28) into which the microscope stage (10) can be inserted and can be adjusted in height by an adjusting knob (12), a bore (30) being formed for the adjusting knob (12) in the first and second housing shells (16 and 18).

3. Microscope according to Claim 1, **characterized in that** a screw (54) is provided for connecting the connecting means (34) for the first and second housing shells (16 and 18), and **in that** the screwing together with the aid of a mounting means (64) is performed through the base part (20) of the stand (4) such that the outer contour of the stand (4) is undisturbed.

4. Microscope according to Claim 1, **characterized in that** the stand (4) has an opening (24) for an eyepiece tube (6), and a fastening (26) for at least one objective (8).

5. Microscope according to Claim 4, **characterized in that** the eyepiece (7) in the eyepiece tube (6) defines an optical axis (9), and the at least one objective (8) located in the operating position defines an optical axis (13), and **in that** the optical axis (9) of the eyepiece (7) and the optical axis (13) of the objective (8) are arranged at an obtuse angle (α).

6. Microscope according to Claim 5, **characterized in that** the obtuse angle (α) is formed between the optical axis (13) of the at least one objective (8) and the optical axis (9) of the eyepiece (7).

7. Microscope according to Claim 1, **characterized in that** provided in the interior of the first or of the second housing shell (16 or 18) is an optical deflecting means (36) which is designed in such a way that the user sees an image of the sample which has the same orientation as the sample itself.

8. Microscope according to Claim 7, **characterized in that** the optical deflecting means (36) is a mirror arrangement or a prism.

9. Microscope according to Claim 1, **characterized in that** together with the microscope stage (10) and the adjusting knob the stand (4) has dimensions which are smaller than those of a conventional carrycase (14).

10. Microscope according to Claim 9, **characterized in that** the carrycase (14) is constructed from a first and a second part (66 and 67), and **in that** a transport securing means for the microscope is respectively provided in the first and in the second part (66 and 67) of the carrycase (14), the transport securing means being designed in each case as part of a negative impression of the microscope.

11. Microscope according to Claim 1, **characterized in that** a single objective is provided in the fastening for the objective.

12. Microscope according to Claim 1, **characterized in that** an objective revolver is provided in the fastening for the objective.

## Revendications

1. Microscope (2) avec un statif (4), assemblé à partir d'une première coque de carter et d'une deuxième coque de carter (16 et 18), le statif (4) portant une table de microscope (10) réglable en hauteur, et la première et la deuxième coque de carter (16 et 18) définissant un fond (20) sur lequel repose le statif (4), **caractérisé en ce que** le statif (4) est en forme de C, qu'un couvercle de fond du statif (22) ferme le fond (20) du statif (4) vers l'extérieur et qu'au moins un moyen de liaison (34) pour la première et la deuxième coque de carter (16 et 18) est prévu, le moyen de liaison (34) étant inaccessible de l'extérieur du statif (4) lorsque le couvercle de fond du statif (22) est fixé.

2. Microscope selon la revendication 1, **caractérisé en ce qu'**une des première et deuxième coque de carter (16 ou 18) assemblées, définit un évidement (28) dans lequel on peut installer la table de microscope (10) réglable en hauteur au moyen d'un bouton de réglage (12), un perçage (30) pour le bouton de réglage (12) étant réalisé dans la première et la deuxième coque de carter (16 et 18).

3. Microscope selon la revendication 1, **caractérisé en ce qu'**une vis (54) est prévue pour relier le moyen de liaison (34) pour la première et la deuxième coque de carter (16 et 18), et que le vissage par un moyen de montage (64) est réalisé à travers le fond (20) du statif (4) de telle sorte que le contour extérieur' du statif (4) ne soit pas perturbé.

4. Microscope selon la revendication 1, **caractérisé en ce que** le statif (4) présente une ouverture (24) pour un tube oculaire (6) et une fixation (26) pour au moins un objectif (8).

5. Microscope selon la revendication 4, **caractérisé en ce que** l'oculaire (7) dans le tube oculaire (6) définit un axe optique (9) et au moins un des objectifs (8) se trouvant en position de travail définit un axe optique (13) et **en ce que** l'axe optique (9) de l'oculaire (7) et l'axe optique (13) de l'objectif (8) sont disposés selon un angle obtus (α).

6. Microscope selon la revendication 5, **caractérisé en ce que** l'angle obtus (α) est formé entre l'axe optique (13) d'au moins un objectif (8) et l'axe optique (9) de l'oculaire (7).

7. Microscope selon la revendication 1, **caractérisé en ce qu'**à l'intérieur de la première ou de la deuxième coque de carter (16 ou 18), il est prévu un moyen de déviation optique (36) et qui est réalisé de telle sorte que l'utilisateur voit une image de l'échantillon ayant la même orientation que l'échantillon lui-même.

8. Microscope selon la revendication 7, **caractérisé en ce que** le moyen de déviation optique (36) est un agencement de miroirs ou un prisme.

9. Microscope selon la revendication 1, **caractérisé en ce que** le statif (4) associé à la table de microscope (10) et au bouton de réglage présente des dimensions inférieures à celles d'une valise de transport (14) traditionnelle.

10. Microscope selon la revendication 9, **caractérisé en ce que** la valise de transport (14) est assemblée à partir d'une première et d'une deuxième partie (66 et 67) et que dans la première et dans la deuxième partie (66 et 67) de la valise de transport (14), il est respectivement prévu une protection pour le transport du microscope, la protection pour le transport étant respectivement formée en partie d'une empreinte négative du microscope.

11. Microscope selon la revendication 1, **caractérisé en ce que** dans la fixation pour l'objectif, il est prévu un seul objectif.

12. Microscope selon la revendication 1, **caractérisé en ce que** dans la fixation pour l'objectif, il est prévu un barillet d'objectif.
